# FASCICULE DE BREVET EUROPEEN

(11) **EP 3 498 083 B1**
(45) Date de publication et mention de la délivrance du brevet: **15.09.2021**
(21) Numéro de dépôt: 18212304.2
(22) Date de dépôt: 13.12.2018
(51) Int. Cl.: A01G 3/037, F16P 3/12

(54) **SÉCATEUR MOTORISÉ ÉLECTROPORTATIF MUNI D'UN DISPOSITIF DE SÉCURITÉ PLUS ERGONOMIQUE ET PLUS SÛR**
TRAGBARE MOTORISIERTE ELEKTRISCHE SCHERE, DIE MIT EINER ERGONOMISCHEREN UND SICHEREREN SICHERHEITSVORRICHTUNG AUSGESTATTET IST
PORTABLE ELECTRIC MOTORIZED SHEARS PROVIDED WITH A MORE ERGONOMIC AND MORE SECURE SAFETY DEVICE

(30) Priorité: 13.12.2017 FR 1762041
(43) Date de publication de la demande: 19.06.2019
(73) Titulaire: Innovation Fabrication Commercialisation Infaco, 81140 Cahuzac-sur-Vère (FR)
(72) Inventeur: GOUT, Christophe, 81150 Castelnau-de-Lévis (FR)
(74) Mandataire: IPAZ

(56) Documents cités:
- WO-A1-2011/047976
- WO-A1-2013/080233
- WO-A1-2013/136311
- WO-A1-2014/118447
- WO-A1-2019/102129
- ES-U- 1 184 658

## Description

### Domaine technique

La présente invention concerne un sécateur motorisé électroportatif muni d'un dispositif de sécurité plus ergonomique et plus sûr, en particulier de type électrique/électronique

Le domaine de l'invention est le domaine des sécateurs motorisés électroportatifs.

### État de la technique

Un sécateur motorisé électroportatif est formé par un outil de coupe fixé à un corps. L'outil de coupe comprend une lame mobile coopérant avec une autre lame mobile, ou une contre-lame fixe, pour réaliser une coupe.

Le sécateur comprend également un moyen d'actionnement de l'outil, tel qu'une gâchette, permettant l'utilisateur de faire fonctionner l'outil.

Le corps du sécateur sert généralement de moyen de préhension et permet à un opérateur de se saisir du sécateur et de le tenir dans sa main pendant qu'il l'utilise.

Pour éviter de blesser l'opérateur utilisant le sécateur, ce dernier peut être pourvu d'un dispositif de sécurité électrique/électronique qui arrête le fonctionnement de l'outil dès qu'il entre en contact avec une partie du corps de l'opérateur. Un tel dispositif de sécurité comprend généralement une borne, dite borne de référence dans la présente demande, électriquement reliée à l'outil de coupe et une borne, dite borne de contact dans la présente demande, électriquement reliée à une partie du corps de l'opérateur ou à un gant conducteur porté par l'opérateur, ainsi qu'un module qui mesure une grandeur électrique entre ces deux bornes, telle qu'une tension d'une fréquence donnée, un courant, ou encore une impédance. Lorsque l'opérateur touche l'outil, ce contact est détecté en fonction de la valeur de la grandeur mesurée.

Dans les sécateurs connus, la borne de contact se présente sous la forme d'une interface déportée par rapport au sécateur. Cette interface déportée est en liaison électrique avec le sécateur grâce à un fil électrique. L'interface électrique est mise au contact avec le corps de l'opérateur grâce à un bracelet, ou un gant conducteur, porté par l'opérateur. Une telle configuration est connue de WO2013/136311 A1.

Or, une telle architecture n'est pas ergonomique dans un environnement de taille car le fil électrique peut gêner l'opérateur. De plus, il existe un risque que le contact électrique avec le corps de l'opérateur soit perdu si le fil est coincé dans un obstacle se trouvant dans l'environnement de l'opérateur, ou si le fil électrique est cassé.

Un but de la présente invention est de remédier aux inconvénients précités.

Un autre but de la présente invention est de proposer un sécateur motorisé électroportatif muni d'un dispositif de sécurité plus ergonomique.

Il est aussi un but de la présente invention de proposer un sécateur motorisé électroportatif muni d'un dispositif de sécurité plus sûr.

### Exposé de l'invention

L'invention permet d'atteindre au moins un des objectifs précités par un sécateur motorisé électroportatif comprenant un outil de coupe et un dispositif de sécurité agissant sur le fonctionnement dudit outil de coupe lorsque ledit outil de coupe entre en contact électrique avec le corps d'un opérateur tenant le sécateur, ledit dispositif de sécurité comprenant :
- une borne, dite de référence, prévue pour être électriquement couplée audit outil ; et
- une unique borne, dite de contact, prévue pour être électriquement couplée au corps dudit opérateur ;
**caractérisé en ce** que l'unique borne de contact est prévue sur/dans ledit sécateur.

Ainsi, dans le sécateur de la présente invention la borne de contact est prévue directement sur/dans le sécateur lui-même, et est solidaire dudit sécateur, contrairement aux sécateurs de l'état de la technique dans lesquels la borne de contact est déportée du sécateur et reliée au sécateur par un fil électrique. Ainsi, le sécateur selon l'invention est plus ergonomique et plus facile à manipuler car il n'existe pas de fil électrique pouvant gêner l'opérateur lorsqu'il manipule le sécateur.

De plus, dans le sécateur selon l'invention, il n'y a pas de risque de perte de liaison électrique avec le corps de l'opérateur au niveau de la borne de contact, à cause d'un obstacle se trouvant dans l'environnement de l'opérateur ou d'un fil cassé, contrairement aux sécateurs de l'état de la technique. Par conséquent, le sécateur selon l'invention propose une plus grande sécurité contre les risques de blessures.

Dans la présente demande, par « contact entre le corps et l'outil de coupe » on entend un contact électrique entre le corps de l'opérateur et l'outil de coupe. Un tel contact électrique peut être :
- un contact direct entre une partie du corps, par exemple la main de l'opérateur, et l'outil ; ou
- un contact indirect, au travers d'une couche conductrice d'électricité, telle que par exemple un gant conducteur porté par l'opérateur.

De même, par « contact entre le corps et la borne de contact » on entend un contact électrique entre le corps de l'opérateur et la borne de contact. Un tel contact électrique peut être :
- un contact direct entre une partie du corps, par exemple la main de l'opérateur, et la borne de contact ; ou
- un contact indirect au travers d'une couche conductrice d'électricité, telle que par exemple un gant conducteur porté par l'opérateur.

Le sécateur selon l'invention peut comprendre un corps sur lequel est monté ledit outil. Ce corps est généralement prévu pour être tenu par la main de l'opérateur utilisant ledit sécateur.

De plus, le sécateur selon l'invention peut comprendre au moins un moyen d'actionnement de l'outil, tel que par exemple une gâchette rotative ou non, ou un bouton rotatif ou non. Ce moyen d'actionnement vient commander un moteur d'entrainement faisant fonctionner l'outil de coupe.

Suivant un mode de réalisation particulièrement préféré, au moins une borne de contact peut être prévue sur, ou solidaire avec, ledit moyen d'actionnement, et en particulier sur la gâchette ou ledit bouton.

Ainsi, une liaison électrique est créée entre le corps de l'opérateur et la borne de contact, de manière sure, et à chaque fois que l'utilisateur touche le moyen d'actionnement, à savoir la gâchette ou le bouton. Par conséquent, la sécurité est disponible dès que, et à chaque fois que, l'utilisateur touche le moyen d'actionnement. En effet, pour faire fonctionner le sécateur, l'opérateur est obligé de toucher le moyen d'actionnement. Or, en touchant le moyen d'actionnement, il vient aussi toucher la borne de contact faisant partie du dispositif de sécurité.

En particulier, au moins une borne de contact peut être prévue sur le moyen d'actionnement, au moins du côté d'une surface entrant en contact avec un doigt de l'utilisateur manipulant ledit moyen d'actionnement.

Alternativement, ou en plus, au moins une borne de contact peut être prévue sur le corps du sécateur, en particulier au niveau d'une zone de préhension dudit corps.

En effet, les sécateurs électroportatifs sont tenus dans la paume d'une main pour être manipulés. Par conséquent, il est possible de prévoir une borne de contact sur le corps du sécateur de sorte que ce dernier vienne obligatoirement en contact avec la paume de la main par exemple, lorsque l'opérateur tient le sécateur.

Le dispositif de sécurité du sécateur selon l'invention comprend une unique borne de contact.

Alternativement, dans un mode de réalisation qui ne tombe pas sous l'étendu de l'invention le dispositif de sécurité du sécateur peut comprendre plusieurs bornes de contact distribuées sur ledit sécateur.

Par exemple, il peut être prévu plusieurs bornes de contact distribuées sur le corps du sécateur ou sur le moyen d'actionnement.

Alternativement ou en plus, au moins une borne de contact peut être prévue sur le moyen d'actionnement et au moins une borne de contact peut être prévue sur le corps du sécateur. La position et la taille de la, ou de chaque, borne de contact peut être déterminée en fonction des dimensions et de la forme de chaque sécateur.

Au moins une borne de contact peut être une borne de contact étendue, c'est-à-dire une borne de contact couvrant une surface étendue.

Avantageusement, au moins une borne de contact peut être réalisée par un élément conducteur dudit sécateur.

Par exemple, au moins une borne de contact peut être réalisée par une partie conductrice d'une coque du corps du sécateur, ou une partie conductrice du moyen d'actionnement.

Au moins une borne de contact peut être réalisée par le moyen d'actionnement lui-même, si ce dernier est réalisé en un matériau conducteur.

Au moins une borne de contact peut être réalisée par toute la coque du corps du sécateur, si ce dernier est réalisé en un matériau conducteur.

Alternativement, ou en plus, au moins une borne de contact peut être réalisée par un élément conducteur, ou une couche conductrice, additionnel(le) rapporté(e)/déposé(e) sur le sécateur.

Par exemple, une telle borne de contact peut être formée par un patch conducteur, ou un revêtement conducteur tel qu'une peinture conductrice, etc.

Une telle borne de contact peut être rapportée/déposée sur une partie du corps du sécateur ou sur une partie du moyen d'actionnement.

Une telle borne de contact peut être amovible/démontable, ou non.

Le dispositif de sécurité du sécateur selon l'invention peut comprendre au moins un moyen de mesure d'une grandeur électrique entre la borne de référence et au moins une borne de contact.

Le moyen de mesure peut être un moyen de mesure d'une grandeur relative à l'impédance entre les bornes de référence et de contact.

Un tel moyen de mesure peut être un moyen de mesure de l'impédance entre les bornes de référence et de contact, ou d'une grandeur relative à ladite impédance telle qu'une tension de déséquilibre d'un pont d'impédances.

Alternativement, le moyen de mesure peut être un moyen de mesure d'une tension aux bornes de référence et de contact, et en particulier d'une tension variable d'une fréquence prédéterminée injectée dans le corps de l'opérateur par au moins une borne de contact. Si cette tension est détectée au niveau de la borne de référence, cela veut dire qu'il y a contact électrique entre le corps de l'opérateur et l'outil de coupe.

Suivant encore une autre alternative, le moyen de mesure peut être un moyen de mesure d'un courant circulant entre la borne de référence et au moins une borne de contact, et en particulier d'un courant injecté dans le corps de l'opérateur par au moins une borne de contact. Si un courant est détecté au niveau de la borne de référence, cela veut dire qu'il y a contact électrique entre le corps de l'opérateur et l'outil de coupe.

De plus, le dispositif de sécurité du sécateur selon l'invention peut comprendre au moins un moyen de commande d'un moteur d'entrainement d'au moins une partie de l'outil de coupe, en particulier pour envoyer une commande de sécurité déclenchant l'arrêt de l'outil de coupe, et/ou l'ouverture de l'outil de coupe, lorsqu'un contact électrique est détecté entre l'outil de coupe et le corps de l'opérateur.

En particulier, le moyen de commande peut être configuré pour :
- comparer une grandeur mesurée à au moins une grandeur prédéterminée, et
- émettre une commande de sécurité en fonction de ladite comparaison.

Par exemple, lorsque la grandeur mesurée est relative à l'impédance, respectivement au courant circulant, entre la borne de référence et au moins une borne de contact, alors la valeur mesurée peut être comparée à une valeur seuil préalablement mesurée et représentative d'un contact électrique entre l'outil de coupe et le corps de l'opérateur. Si la valeur seuil est atteinte, alors la commande de sécurité peut être émise.

Lorsque la grandeur mesurée est la tension entre les bornes de référence et de contact, la fréquence de la tension mesurée peut être comparée à la fréquence de la tension injectée dans le corps de l'opérateur. Si les fréquences sont les mêmes, cela signifie un contact électrique entre le corps de l'opérateur et l'outil : dans ce cas la commande de sécurité peut être émise.

Suivant un exemple de réalisation non limitatif, l'outil de coupe peut comprendre une lame mobile et une contre-lame fixe, la borne de référence étant électriquement couplée à ladite lame mobile et/ou à ladite contre-lame fixe.

Suivant un autre exemple de réalisation, l'outil de coupe peut comprendre deux lames mobiles, la borne de référence étant électriquement couplée à au moins une desdites lames mobiles.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple non limitatif d'un dispositif de sécurité pouvant être mis en œuvre dans un sécateur selon l'invention ;
- les FIGURES 2-5 sont des représentations schématiques de quatre exemples de réalisation non limitatifs d'un sécateur selon l'invention ; et
- la FIGURE 6 est une représentation schématique d'un exemple non limitatif d'un moyen de mesure pouvant être mis en œuvre dans un dispositif de sécurité selon l'invention.

Il est bien entendu que les modes de réalisation qui seront décrits dans la suite ne sont nullement limitatifs. On pourra notamment imaginer des variantes ne comprenant qu'une sélection de caractéristiques décrites par la suite, isolées des autres caractéristiques décrites, si cette sélection de caractéristiques est suffisante pour conférer un avantage technique ou pour différencier une de ces variantes par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier ladite variante par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

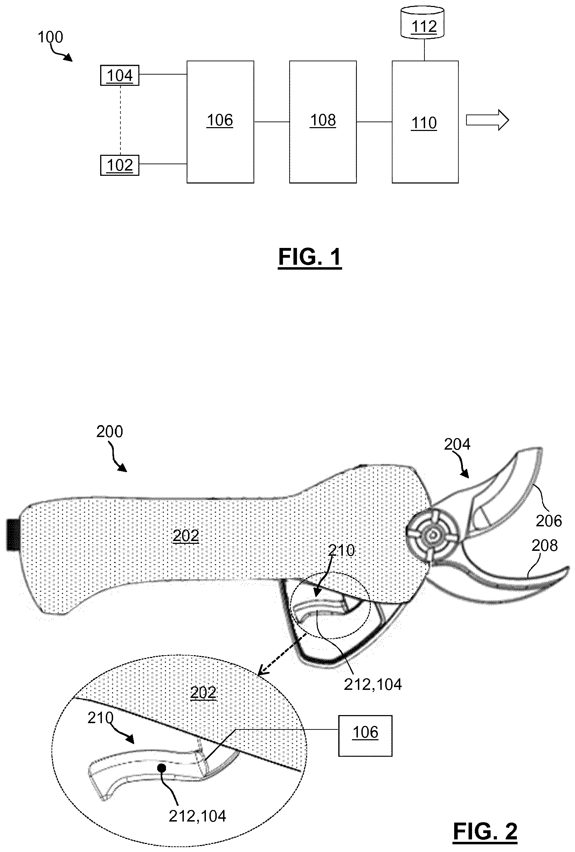

La FIGURE 1 est une représentation schématique d'un exemple de réalisation non limitatif d'un dispositif de sécurité pouvant être mis en œuvre dans un sécateur selon l'invention.

Le dispositif de sécurité 100, représenté sur la FIGURE 1, comprend une première borne électrique 102, dite borne de référence, électriquement couplée avec l'outil de coupe d'un sécateur motorisé électroportatif.

Le dispositif de sécurité 100 comprend une ou plusieurs deuxième(s) borne(s) électrique(s) 104, dite borne(s) de contact, électriquement couplée(s) avec le corps d'un opérateur, soit directement soit par l'intermédiaire d'une couche conductrice. Par exemple, une borne de contact 104 peut être en contact avec la peau de la main d'un opérateur directement ou par l'intermédiaire d'un gant conducteur porté par l'opérateur.

Le dispositif de sécurité 100 comprend un moyen 106 de mesure d'un signal électrique qui peut être, ou qui peut être représentatif de :
- une tension aux bornes 102 et 104 ;
- un courant circulant entre les bornes 102 et 104 ; ou
- une impédance entre les bornes 102 et 104.

De manière optionnelle, le dispositif de sécurité 100 peut comprendre un étage de traitement 108 utilisé pour :
- adapter le niveau du signal mesuré, en particulier pour adapter le niveau du signal à un niveau de signal utilisé dans le sécateur électroportatif mettant en œuvre le dispositif 100 ; et/ou
- réaliser un filtrage du signal mesuré pour supprimer les éventuels parasites, par exemple à l'aide un filtre RC passe-bas.

Le dispositif de sécurité 100 peut en outre comprendre un module de commande 110. Ce module de commande 110 est prévu pour comparer la valeur du signal mesuré par le moyen de mesure, ou une valeur déduite à partir du signal mesuré, avec une valeur de référence/seuil prédéterminée.

La valeur de référence/seuil peut par exemple être mémorisée dans une mémoire 112 prévue à cet effet.

Si le résultat de la comparaison est positif, alors le module de commande 110 émet une commande d'urgence vers un moteur du sécateur électroportatif, directement ou par l'intermédiaire d'un microprocesseur ou d'une carte électronique dudit sécateur.

La commande d'urgence peut comprendre une commande d'arrêt de la ou des lames mobiles du sécateur. Alternativement, ou en plus, la commande d'urgence peut comprendre une commande d'ouverture de la lame, ou des lames, mobiles du sécateur.

La comparaison effectuée par le module de commande peut être une comparaison :
- d'une valeur mesurée du courant entre les bornes 102 et 104, à une valeur seuil de courant prédéterminée représentative d'un contact entre le corps de l'opérateur et l'outil de coupe ;
- d'une valeur mesurée de l'impédance entre les bornes 102 et 104, à une valeur seuil d'impédance prédéterminée représentative d'un contact entre le corps de l'opérateur et l'outil de coupe ; ou
- d'une valeur de fréquence d'une tension présente à la borne de référence 102, à une valeur de fréquence d'une tension injectée à la borne de contact 104.

Le module de commande 110 peut être agencé pour réaliser une phase de calibration. Lors de cette phase de calibration, la borne de référence 102 est mise au contact avec le corps de l'opérateur, et un signal relatif à l'impédance, respectivement au courant, est mesuré et mémorisé comme valeur seuil, dans la mémoire 112 par exemple.

Alternativement, la valeur seuil peut être une valeur obtenue à partir de la valeur mesurée, éventuellement après pondération.

Le module de commande 110 peut être un composant indépendant, ou être intégré dans le microprocesseur, ou dans une carte électronique, du sécateur.

La mémoire 112 peut être un composant indépendant, ou être intégrée dans le module de commande 110, ou dans un microprocesseur (ou une carte électronique) du sécateur.

La FIGURE 2 est une représentation schématique d'un premier exemple de réalisation non limitatif d'un sécateur motorisé électroportatif selon l'invention.

Le sécateur 200, représenté sur la FIGURE 2, comprend un corps 202 sur lequel est monté un outil de coupe 204. L'outil de coupe 204 est formé par une lame mobile 206 coopérant avec une contre-lame fixe 208 pour réaliser une coupe.

Le sécateur 200 comprend en outre une gâchette rotative 210 permettant d'actionner ou non la lame mobile 206.

Le corps 202 est prévu pour être tenu dans une main d'un opérateur lorsque ce dernier utilise le sécateur 200.

Dans l'exemple représenté sur la FIGURE 2, la gâchette rotative 210 comporte un habillage 212, électriquement conducteur, formant la borne de contact 104 du dispositif de sécurité 100.

Ainsi, lorsque l'utilisateur vient appuyer sur la gâchette 210 avec un doigt, pour actionner l'outil de coupe, le corps de l'opérateur entre en contact électrique avec la borne de contact 104 par l'intermédiaire du doigt appuyant sur la gâchette 210.

Le revêtement conducteur 212 peut être un revêtement réalisé en un matériau conducteur, tel que du métal, puis disposé sur la gâchette 210 de manière démontable/amovible, ou non. Alternativement, le revêtement conducteur 212 peut être réalisé par dépôt d'une couche conductrice, tel qu'une peinture conductrice, sur la gâchette 210.

Suivant une autre alternative, le sécateur 200 peut comporter plusieurs zones conductrices prévues sur la gâchette 210 et formant chacune une borne de contact 104.

Suivant encore une autre alternative, une partie ou la totalité de la gâchette 210 du sécateur 200 peut être conductrice et peut former la borne de contact 104.

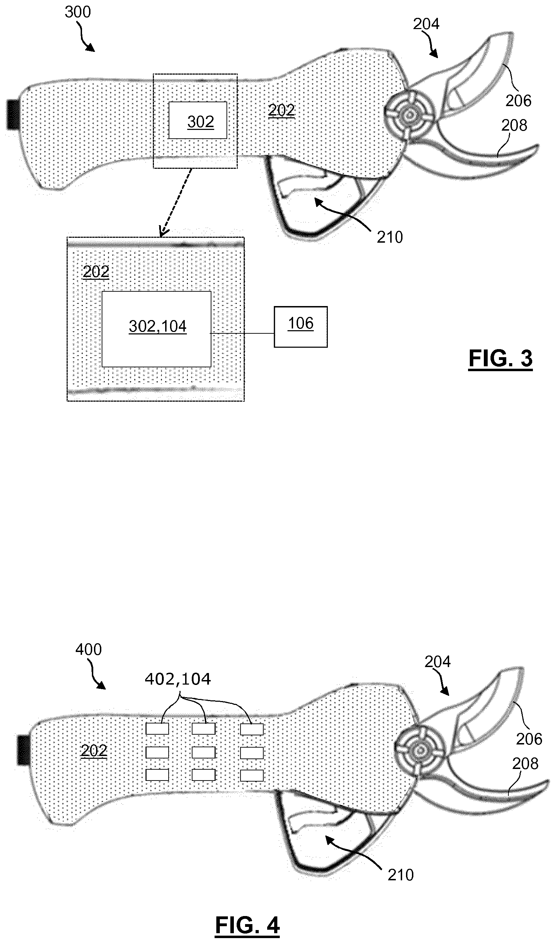

La FIGURE 3 est une représentation schématique d'un deuxième exemple de réalisation non limitatif d'un sécateur selon l'invention.

Le sécateur 300, représenté sur la FIGURE 3, comprend tous les éléments du sécateur 200 de la FIGURE 2, sauf le revêtement conducteur 202.

Le sécateur 300 comprend au niveau du corps 202 du sécateur une zone conductrice 302, étendue, formant la borne de contact 104 du dispositif 100 de la FIGURE 1.

La zone conductrice 302 est prévue au niveau d'une zone, dite de préhension, du corps 202 du sécateur 300 se trouvant dans la paume de la main de l'opérateur, lorsque ce dernier utilise le sécateur 300.

Cette zone conductrice 302 peut être réalisée par une plaque conductrice additionnelle rapportée sûr, ou dans, la coque du sécateur 300.

Alternativement, cette zone conductrice 302 peut être formée par une plaque conductrice faisant partie de la coque du sécateur 300.

La FIGURE 4 est une représentation schématique d'un troisième exemple de réalisation non limitatif d'un sécateur selon l'invention.

Le sécateur 400, représenté sur la FIGURE 4, comprend tous les éléments du sécateur 300 de la FIGURE 3.

A la différence du sécateur 300 de la FIGURE 3, le sécateur 400 de la FIGURE 4 comprend plusieurs zones conductrices 402, distribuées sur la coque du corps 202, et formant chacune une borne de contact 104.

Chaque zone conductrice 402 peut être formée par un élément ou un revêtement, additionnel, rapporté sur/dans la coque du corps 202 du sécateur, ou faire partie de la coque du corps 202.

Suivant encore une autre alternative, non représentée, toute la coque extérieure du corps 202 du sécateur peut être conductrice et peut former la borne de contact 104.

Bien entendu, chaque mode de réalisation décrit en référence à la FIGURE 2 peut être combiné avec chaque mode de réalisation décrit en référence eux FIGURE 3 et 4.

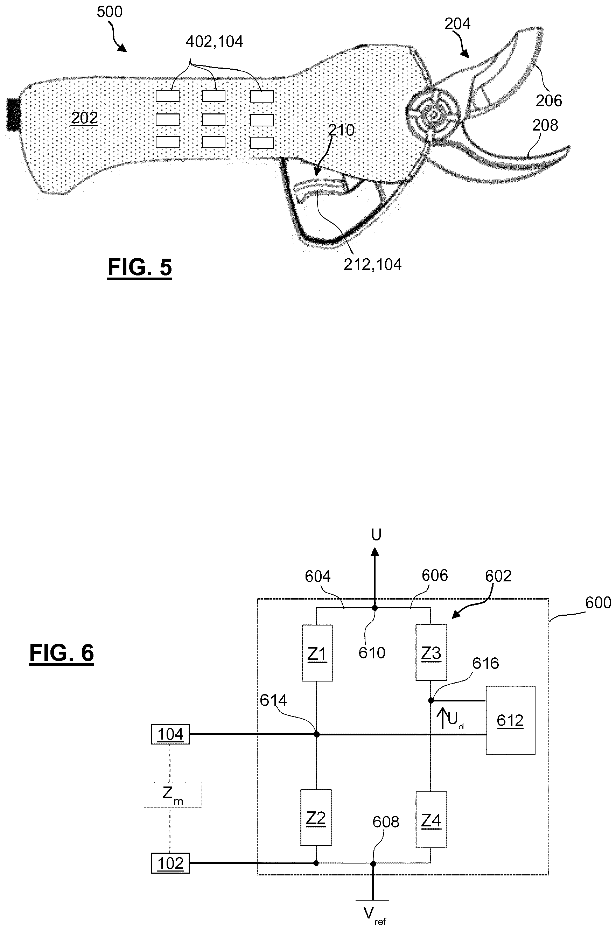

Par exemple, la FIGURE 5 représente un sécateur 500 combinant les modes de réalisations représentés sur les FIGURES 2 et 4.

La FIGURE 6 est une représentation schématique d'un exemple de réalisation nullement limitatif d'un moyen de mesure pouvant être mis en œuvre dans un dispositif selon l'invention.

Le moyen de mesure 600, représenté sur la FIGURE 6, peut être le moyen de mesure 106 de la FIGURE 1.

Le moyen de mesure 600 permet de mesurer une tension, notée U_{d}, directement proportionnelle à une impédance Zₘ entre la borne de référence 102 et la borne de contact 104.

Pour ce faire, le moyen de mesure comprend un pont d'impédances 602, formé par deux branches parallèles 604 et 606. Les deux branches 604 et 606 sont reliées à une de leur extrémité 608 à un potentiel de référence, notée V_{ref}, et à l'autre extrémité 610 à un générateur délivrant une tension U, alternative ou continue. La branche 604 comporte deux impédances en série Z1 et Z2, et la branche 606 comporte deux impédances en série Z3 et Z4.

Le moyen de mesure 600 comporte en outre un capteur de tension 612, ou voltmètre, permettant de mesurer la tension, notée U_{d}, entre les branches 604 et 606, et en particulier entre d'une part un premier point 614 se trouvant entre les impédances Z1 et Z2 de la branche 604 et d'autre part un deuxième point 616 se trouvant entre les impédances Z3 et Z4 de la branche 606.

Les impédances Z1 à Z4 sont choisies de sorte que le pont d'impédances 602 est équilibré. La tension U_{d} mesurée par le capteur de tension 612 est donc nulle.

La borne de référence 102 est électriquement couplée au pont d'impédance 602 au niveau de l'extrémité 608 se trouvant au potentiel de référence V_{ref}. La, ou chaque, borne de contact 104 est électriquement couplée au pont d'impédance 602 au niveau du point 614 se trouvant entre les impédances Z1 et Z2 de la branche 604. Ainsi, l'impédance Zₘ vue entre les bornes 102 et 104 vient s'ajouter, en dérivation, avec l'impédance Z2 et déséquilibre le pont d'impédance 602. La tension U_{d} mesurée est alors proportionnelle à la valeur de l'impédance Zₘ. Connaissant la valeur des impédances Z1 et Z2, il est alors possible de calculer la valeur de Zₘ.

Lorsque l'outil entre en contact avec le corps de l'opérateur, alors la borne de référence 102, électriquement couplé à l'outil, se trouve électriquement couplé au corps de l'opérateur. La borne de contact 104 étant aussi électriquement couplé au corps de l'opérateur, l'impédance Zₘ est alors égale à l'impédance, notée Z_{corps}, du corps de l'opérateur.

Par conséquent, en mesurant la tension U_{d}, il est possible de détecter la valeur de l'impédance Zₘ. En comparant la valeur Zₘ mesurée à l'impédance Z_{corps}, préalablement mesurée et mémorisée, il est possible de détecter un contact entre l'outil et le corps de l'opérateur, et une commande d'urgence.

Le moyen de mesure 600 décrit en référence à la FIGURE 6 est un exemple de réalisation non limitatif qui peut être utilisé lorsque le dispositif de sécurité est basé sur une variation d'impédance entre les bornes de référence et de contact.

Lorsque le dispositif de sécurité est basé sur une variation de courant circulant entre les bornes de référence et de contact, alors il est possible d'utiliser un ampèremètre, ou équivalent, comme moyen de mesure.

Lorsque le dispositif de sécurité est basé sur la détection d'une tension de fréquence donnée, le moyen de mesure peut être un voltmètre, par exemple.

Bien sûr, l'invention n'est pas limitée aux exemples qui viennent d'être décrits et de nombreux aménagements peuvent être apportés à ces exemples.

## Revendications

1. Sécateur motorisé électroportatif (200;300;400;500) comprenant un outil de coupe (204), un moyen (210) d'actionnement dudit outil de coupe (204), en particulier sous la forme d'une gâchette ou d'un bouton, et un dispositif de sécurité (100) agissant sur le fonctionnement dudit outil de coupe (204) lorsque ledit outil de coupe (204) entre en contact électrique avec le corps d'un opérateur tenant le sécateur, ledit dispositif de sécurité (100) comprenant :
- une borne (102), dite de référence, prévue pour être électriquement couplée audit outil de coupe (204) ; et
- une unique borne (104), dite de contact, prévue pour être électriquement couplée au corps dudit opérateur ;
**caractérisé en ce que** l'unique borne de contact (104) est prévue sur ledit moyen d'actionnement (210).

2. Sécateur (200;300;400;500) selon la revendication précédente, **caractérisé en ce que** l'unique borne de contact (104;212) est réalisée par un élément conducteur sur le moyen d'actionnement (210).

3. Sécateur (200;300;400;500) selon la revendication 1, **caractérisé en ce que** l'unique borne de contact (104;212) est réalisée par une couche conductrice déposée sur le moyen d'actionnement (210).

4. Sécateur (200;300;400;500) selon l'une quelconque des revendications précédentes, **caractérisé en ce que** le dispositif de sécurité (100) comprend un moyen de mesure (106) d'une grandeur électrique entre la borne de référence (102) et l'unique borne de contact (104).

5. Sécateur (200;300;400;500) selon la revendication précédente, **caractérisé en ce que** le moyen de mesure (106) est un moyen (600) de mesure de l'impédance entre les bornes de référence (102) et de contact (104), ou d'une grandeur relative à ladite impédance.

6. Sécateur (200;300;400;500) selon la revendication 4, **caractérisé en ce que** le moyen de mesure (106) est un moyen de mesure d'une tension aux bornes de référence (102) et de contact (104).

7. Sécateur (200;300;400;500) selon la revendication 4, **caractérisé en ce que** le moyen de mesure (106) est un moyen de mesure d'un courant circulant entre la borne de référence (102) et de contact (104).

8. Sécateur (200;300;400;500) selon l'une quelconque des revendications précédentes, **caractérisé en ce que** le dispositif de sécurité (100) comprend au moins un moyen (110) de commande d'un moteur d'entrainement d'au moins une partie de l'outil de coupe (204).

9. Sécateur (200;300;400;500) selon la revendication précédente, **caractérisé en ce que** le moyen de commande (110) est configuré pour :
- comparer une grandeur mesurée à au moins une grandeur prédéterminée, et
- émettre une commande de sécurité en fonction de ladite comparaison.

10. Sécateur (200;300;400;500) selon l'une quelconque des revendications précédentes, **caractérisé en ce que** l'outil de coupe (204) comprend une lame mobile (206) et une contre-lame fixe (208), la borne de référence (102) étant électriquement couplée à ladite lame mobile (206) et/ou à ladite contre-lame fixe (208).

11. Sécateur selon l'une quelconque des revendications 1 à 9, **caractérisé en ce que** l'outil de coupe comprend deux lames mobiles, la borne de référence étant électriquement couplée à au moins une desdites lames mobiles.

## Patentansprüche

1. Tragbare motorisierte elektrische Schere (200; 300; 400; 500) mit einem Schneidwerkzeug (204), einem Mittel (210) zur Betätigung des Schneidwerkzeugs (204), insbesondere in Form eines Abzugs oder eines Knopfes, und einer Sicherheitsvorrichtung (100), die auf den Betrieb des Schneidwerkzeugs (204) einwirkt, wenn das Schneidwerkzeug (204) in elektrischen Kontakt mit dem Körper eines die Schere haltenden Bedieners kommt, wobei die Sicherheitsvorrichtung (100) aufweist:
- einen Referenzanschluss (102), der zum elektrischen Koppeln mit dem Schneidwerkzeug (204) vorgesehen ist; und
- einen Einzelkontaktanschluss (104), der zum elektrischen Koppeln mit dem Körper des Bedieners vorgesehen ist;
**dadurch gekennzeichnet, dass** der Einzelkontaktanschluss (104) an dem Betätigungsmittel (210) vorgesehen ist.

2. Schere (200; 300; 400; 500) nach dem vorhergehenden Anspruch, **dadurch gekennzeichnet, dass** der Einzelkontaktanschluss (104; 212) durch ein leitendes Element am Betätigungsmittel (210) realisiert ist.

3. Schere (200; 300; 400; 500) nach Anspruch 1, **dadurch gekennzeichnet, dass** der Einzelkontaktanschluss (104; 212) durch eine auf dem Betätigungsmittel (210) aufgebrachte leitende Schicht realisiert ist.

4. Schere (200; 300; 400; 500) nach einem der vorhergehenden Ansprüche, **dadurch gekennzeichnet, dass** die Sicherheitsvorrichtung (100) ein Mittel (106) zum Messen einer elektrischen Größe zwischen dem Referenzanschluss (102) und dem Einzelkontaktanschluss (104) aufweist.

5. Schere (200; 300; 400; 500) nach dem vorhergehenden Anspruch, **dadurch gekennzeichnet, dass** das Messmittel (106) ein Mittel (600) zum Messen der Impedanz zwischen den Anschlüssen der Referenz (102) und des Kontakts (104) oder einer mit dieser Impedanz verbundenen Größe ist.

6. Schere (200; 300; 400; 500) nach Anspruch 4, **dadurch gekennzeichnet, dass** das Messmittel (106) ein Mittel zum Messen einer Spannung an den Referenz- und Kontaktanschlüssen (102; 104) ist.

7. Schere (200; 300; 400; 500) nach Anspruch 4, **dadurch gekennzeichnet, dass** das Messmittel (106) ein Mittel zum Messen eines Stroms ist, der zwischen dem Referenzanschluss (102) und dem Kontaktanschluss (104) fließt.

8. Schere (200; 300; 400; 500) nach einem der vorhergehenden Ansprüche, **dadurch gekennzeichnet, dass** die Sicherheitsvorrichtung (100) mindestens ein Mittel (110) zur Steuerung eines Antriebsmotors von mindestens einem Teil des Schneidwerkzeugs (204) aufweist.

9. Schere (200; 300; 400; 500) nach dem vorhergehenden Anspruch, **dadurch gekennzeichnet, dass** das Steuermittel (110) konfiguriert ist, um:
- eine gemessene Größe mit mindestens einer vorbestimmten Größe zu vergleichen, und
- in Abhängigkeit von diesem Vergleich einen Sicherheitsbefehl auszugeben.

10. Schere (200; 300; 400; 500) nach einem der vorhergehenden Ansprüche, **dadurch gekennzeichnet, dass** das Schneidwerkzeug (204) eine bewegliche Klinge (206) und eine feste Gegenklinge (208) aufweist, wobei der Referenzanschluss (102) elektrisch mit der beweglichen Klinge (206) und/oder mit der festen Gegenklinge (208) gekoppelt ist.

11. Schere nach einem der Ansprüche 1 bis 9, **dadurch gekennzeichnet, dass** das Schneidwerkzeug zwei bewegliche Klingen aufweist, wobei der Referenzanschluss mit mindestens einer der beweglichen Klingen elektrisch gekoppelt ist.

## Claims

1. Portable electric motorized shears (200;300;400;500) comprising a cutting tool (204), a means (210) for actuating said cutting tool (204), in particular in the form of a trigger or a button, and a safety device (100) acting on the operation of said cutting tool (204) when said cutting tool (204) comes into electrical contact with the body of an operator holding the shears, said safety device (100) comprising:
- a terminal (102), called reference terminal, intended to be electrically coupled to said cutting tool (204); and
- a single terminal (104), called contact terminal, intended to be electrically coupled to the body of said operator;
**characterized in that** the single contact terminal (104) is provided on said actuating means (210).

2. Shears (200;300;400;500) according to the preceding claim, **characterized in that** the single contact terminal (104;212) is produced by a conductive element on the actuating means (210).

3. Shears (200;300;400;500) according to claim 1, **characterized in that** the single contact terminal (104;212) is produced by a conductive layer deposited on the actuating means (210).

4. Shears (200;300;400;500) according to any one of the preceding claims, **characterized in that** the safety device (100) comprises a means (106) for measuring an electrical quantity between the reference terminal (102) and the single contact terminal (104).

5. Shears (200;300;400;500) according to the preceding claim, **characterized in that** the measurement means (106) is a means (600) for measuring the impedance between the reference (102) and contact (104) terminals, or a quantity relative to said impedance.

6. Shears (200;300;400;500) according to claim 4, **characterized in that** the measurement means (106) is a means for measuring a voltage at the reference (102) and contact (104) terminals.

7. Shears (200;300;400;500) according to claim 4, **characterized in that** the measurement means (106) is a means for measuring a current flowing between the reference (102) and contact (104) terminals.

8. Shears (200;300;400;500) according to any one of the preceding claims, **characterized in that** the safety device (100) comprises at least one means (110) for controlling a drive motor for at least one part of the cutting tool (204).

9. Shears (200;300;400;500) according to the preceding claim, **characterized in that** the control means (110) is configured for:
- comparing a measured quantity to at least one predetermined quantity, and
- issuing a safety command as a function of said comparison.

10. Shears (200;300;400;500) according to any one of the preceding claims, **characterized in that** the cutting tool (204) comprises a movable blade (206) and a fixed counter-blade (208), the reference terminal (102) being electrically coupled to said movable blade (206) and/or to said fixed counter-blade (208).

11. Shears according to any one of claims 1 to 9, **characterized in that** the cutting tool comprises two movable blades, the reference terminal being electrically coupled to at least one of said movable blades.
